# EUROPEAN PATENT APPLICATION

(11) **EP 4 395 400 A1**
(43) Date of publication of application: **03.07.2024**
(21) Application number: 22861419.4
(22) Date of filing: 24.08.2022
(51) Int. Cl.: H04W 16/28, H04B 7/06, H04W 16/26

(54) **WIRELESS COMMUNICATION NODE AND WIRELESS COMMUNICATION METHOD**

(30) Priority: 26.08.2021 JP 2021137968
(71) Applicant: NTT DOCOMO, INC., Tokyo 100-6150 (JP)
(72) Inventor: KURITA, Daisuke, Tokyo 100-6150 (JP); HARADA, Hiroki, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/031953
(87) International publication number: WO 2023/027131

(57) **Abstract**

A radio communication node controls transmission of an antenna beam. The radio communication node transmits, to a parent node, a control element of a medium access control layer representing a recommended antenna beam recommended for use.

## Description

### Technical Field

The present disclosure relates to a radio communication node and a radio communication method for configuring radio access and a radio backhaul.

### Background Art

The 3rd Generation Partnership Project (3GPP) has prepared a specification for the 5th generation mobile communication system (also referred to as 5G, New Radio (NR), or Next Generation (NG)), and further a specification for a next-generation system referred to as Beyond 5G, 5G Evolution, or 6G is also being prepared.

For example, in a radio access network (RAN) of NR, an Integrated Access and Backhaul (IAB) is specified in which radio access to a terminal (User Equipment, UE) and a radio backhaul between radio communication nodes such as radio base stations (gNBs) are integrated (see Non-Patent Literature 1).

In the IAB, an IAB node has Mobile Termination (MT) which is a function for connecting to a parent node (may be referred to as an IAB donor) and a Distributed Unit (DU) which is a function for connecting to a child node or UE.

In addition, in 3GPP Release 17, with respect to simultaneous transmission/simultaneous reception of the IAB-MT and IAB-DU, it is investigated that the parent node indicates an antenna beam to be used by the IAB-MT in consideration of a selection status of an antenna beam (may be simply referred to as a beam) of the IAB-DU.

### Citation List

### Non-Patent Literature

Non-Patent Literature 1: 3GPP TS 38.213 V16.6.0, 3rd Generation Partnership Project; Technical Specification Group Radio Access Network; NR; Physical layer procedures for control (Release 16), 3GPP, June 2021

### Summary of the Invention

When the parent node indicates the antenna beam to be used by the IAB-MT, the parent node needs to recognize the selection status of the antenna beam of the IAB-DU.

Therefore, the following disclosure has been made in view of such a situation, and an object of the present disclosure is to provide a radio communication node and a radio communication method in which a parent node can easily and reliably recognize a selection status of an antenna beam of an IAB-DU.

An aspect of the present disclosure provides a radio communication node (radio communication node 150) including: a control unit (control unit 190) for controlling transmission of an antenna beam; and a transmitting unit (upper node connection unit 170) for transmitting, to a parent node, a control element of a medium access control layer representing a recommended antenna beam recommended for use.

An aspect of the present disclosure provides a radio communication method including: a step of controlling transmission of an antenna beam; and a step of transmitting, to a parent node, a control element of a medium access control layer representing a recommended antenna beam recommended for use.

### Brief Description of Drawings

[Fig. 1] Fig. 1 is an overall schematic configuration diagram of a radio communication system 10.
[Fig. 2] Fig. 2 is a functional block diagram of a radio communication node 50.
[Fig. 3] Fig. 3 is a functional block diagram of a radio communication node 100 and a radio communication node 150.
[Fig. 4] Fig. 4 is a diagram showing an example of a schematic communication sequence for control of an antenna beam BM of IAB-MT and an IAB-DU.
[Fig. 5] Fig. 5 is a diagram showing a configuration example of an MAC CE according to (Alt 1-1) of Operation Example 1.
[Fig. 6] Fig. 6 is a diagram showing a configuration example of an MAC CE according to (Alt 1-2) of Operation Example 1.
[Fig. 7] Fig. 7 is a diagram showing a configuration example of an MAC CE according to (Alt 2-1) of Operation Example 1.
[Fig. 8] Fig. 8 is a diagram showing a configuration example of an MAC CE according to (Alt 2-2) of Operation Example 1.
[Fig. 9] Fig. 9 is a diagram showing a configuration example of an MAC CE according to (Alt 3-1) of Operation Example 1.
[Fig. 10] Fig. 10 is a diagram showing a configuration example of an MAC CE according to (Alt 3-2) of Operation Example 1.
[Fig. 11] Fig. 11 is a diagram showing a configuration example of an MAC CE according to (Alt 4-1) of Operation Example 1.
[Fig. 12] Fig. 12 is a diagram showing a configuration example of an MAC CE according to (Alt 4-2) of Operation Example 1.
[Fig. 13] Fig. 13 is a diagram showing an application example of a recommended MT beam according to Operation Example 4.
[Fig. 14] Fig. 14 is a diagram showing an example of the hardware configuration of the radio communication node 50, the radio communication node 100, the radio communication node 150, and a UE 200.

### Description of Embodiments

Embodiments will be explained below with reference to the accompanying drawings. Note that the same or similar reference numerals have been attached to the same functions and configurations, and the description thereof is omitted as appropriate.

### (1) Overall schematic configuration of radio communication system

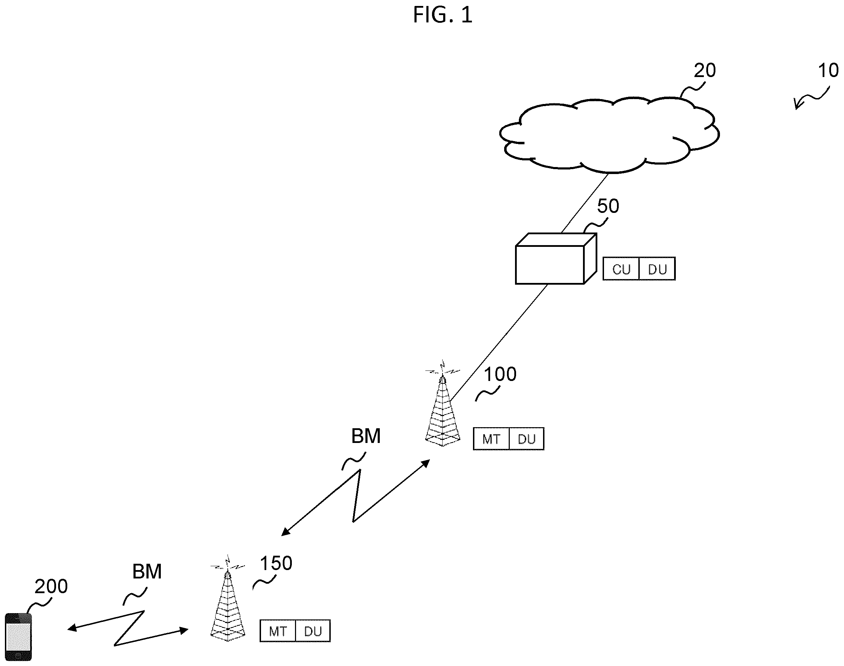

Fig. 1 is an overall schematic configuration diagram of a radio communication system 10 according to the present embodiment. The radio communication system 10 is compliant with 5G New Radio (NR) and is constituted by a plurality of radio communication nodes and a terminal. The radio communication system 10 may be compliant with a method referred to as Beyond 5G, 5G Evolution, or 6G.

Specifically, the radio communication system 10 includes a Next Generation-Radio access Network 20 (hereinafter referred to as an NG-RAN 20), a radio communication node 50, a radio communication node 100, a radio communication node 150, and a terminal 200 (hereinafter referred to as a UE 200, User Equipment).

The radio communication node 50, the radio communication node 100, and the radio communication node 150 can configure radio access (Access link) with the UE 200 and a radio backhaul (Backhaul link) between the radio communication nodes via cells. For example, a backhaul (transmission line) by means of a radio link may be configured between the radio communication node 50 and the radio communication node 100, or between the radio communication node 100 and the radio communication node 150.

In this way, a configuration in which the radio access to the UE 200 and the radio backhaul between the radio communication nodes are integrated is referred to as Integrated Access and Backhaul (IAB) .

The IAB reuses existing functions and interfaces defined for radio access. In particular, the following can be used as baselines: Mobile-Termination (MT), a gNB-DU (Distributed Unit), gNB-CU (Central Unit), User Plane Function (UPF), Access and Mobility Management Function (AMF), and Session Management Function (SMF), and corresponding interfaces such as NR Uu (between MT and gNB/DU), F1, NG, X2, and N4.

The radio communication node 100 is connected to the NG-RAN 20 and a core network (Next Generation Core (NGC) or 5GC) via a wired transmission line such as a fiber transport. The NG-RAN and NGC may simply be expressed as a "network".

In the present embodiment, the radio communication node 50 constitutes an IAB donor in the IAB, and the radio communication node 100 may constitute a Parent node in the IAB. Further, the radio communication node 150 may constitute an IAB node in the IAB.

The IAB donor (may be a parent node) may be referred to as an upper node relative to the IAB node. In addition, the IAB donor may be referred to as a Parent node and vice versa. Further, the IAB donor may have a CU, and the parent node may be used simply as a name relative to the IAB node (or a child node) and may not have a CU. The IAB node may be referred to as a lower node relative to the IAB donor (parent node). Furthermore, the child node may have the UE 200.

A radio link (Backhaul link) is configured between the IAB donor (or parent node) and the IAB node. Specifically, a radio link referred to as Link parent may be configured. A radio link (Backhaul link) is configured between the IAB node and the child node. Specifically, a radio link referred to as Link_child may be configured.

The Link_parent may be constituted by a DL Parent BH in a downlink direction and an UL Parent BH in an uplink direction. The Link_child may be constituted by a DL Child BH in a downlink direction and an UL Child BH in an uplink direction.

The IAB node (may include a parent node) has Mobile Termination (IAB-MT) which is a function for connecting to the IAB donor (or parent node) and a Distributed Unit (IAB-DU) which is a function for connecting to the child node (or UE 200). The child node also has MT and a DU. The IAB donor has a Central Unit (CU) and DU.

With respect to radio resources used by the DU, from a DU perspective, a downlink (DL), an uplink (UL), and Flexible time resource (D/U/F) are classified as any of types such as Hard, Soft, and Not Available (H/S/NA). Further, even within resources classified as Soft (S), a type such as available or not available is specified.

The Flexible time-resource (F) is a radio resource (time resource and/or frequency resource) usable for both a DL and an UL. Further, the term "hard" means a radio resource in which the corresponding time resource is always usable for a DU child link for connecting to a child node or a UE, and the term "soft" means a radio resource (DU resource) in which whether the corresponding time resource is usable for a DU child link is explicitly or implicitly controlled by the IAB donor (or parent node).

Further, if a resource is classified as Soft (S), a radio resource to be notified can be determined based on IA or INA.

"IA" means that a DU resource is explicitly or implicitly represented as usable. Further, "INA" means that a DU resource is explicitly or implicitly represented as not usable.

In the present embodiment, radio access and a radio backhaul may be either Half-duplex communication or Full-duplex communication. Further, time division multiplexing (TDM), space division multiplexing (SDM), and frequency division multiplexing (FDM) can be used as multiplexing systems.

If the IAB node operates by means of Half-duplex communication, a DL Parent BH serves as a receiving (RX) side and an UL Parent BH serves as a transmitting (TX) side, and a DL Child BH serves as a transmitting (TX) side and an UL Child BH serves as a receiving (RX) side. Further, in the case of Time Division Duplex (TDD), a configuration pattern of the DL/UL in the IAB node is not limited to DL-F-UL only, and a radio backhaul (BH) only or configuration patterns such as UL-F-DL may be applied. In the present embodiment, simultaneous operation of the DU and MT of the IAB node is realized by using the SDM/FDM.

In the radio communication system 10, it is possible to support Massive MIMO in which an antenna beam BM with higher directivity is generated by controlling radio signals transmitted from a plurality of antenna elements, carrier aggregation (CA) in which a plurality of component carriers (CCs) are bundled and used, dual connectivity (DC) in which communication is performed simultaneously between a UE and each of a plurality of NG-RAN Nodes, and the like.

In the radio communication system 10, even the IAB, scenarios of dual connectivity (DC) such as Intra-band DC and Intra-Carrier DC may be supported.

The Intra-band DC is DC within a specific frequency band, and a plurality of component carriers (CCs) may be used. The Intra-Carrier DC is DC within a band for a CC. The Intra-band DC may include the Intra-Carrier DC.

The radio communication node 150 (IAB node) may be connected to two radio communication nodes 100 and perform DC. In this case, one of the radio communication nodes 100 may constitute a master cell group (MCG) and the other of the radio communication nodes 100 may constitute a secondary cell group (SCG).

### (2) Functional block configuration of radio communication system

Next, a functional block configuration of the radio communication system 10 will be described. Specifically, the functional block configurations of the radio communication node 50, the radio communication node 100, and the radio communication node 150 will be described.

### (2.1) Radio communication node 50

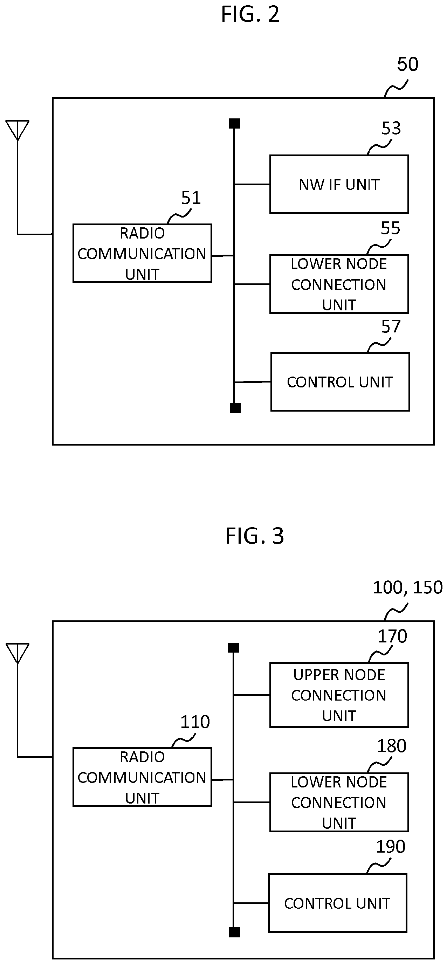

Fig. 2 is a functional block diagram of the radio communication node 50 constituting the IAB donor. As shown in Fig. 2, the radio communication node 50 includes a radio communication unit 51, an NW IF unit 53, a lower node connection unit 55, and a control unit 57.

The radio communication unit 51 transmits and receives NR-compliant radio signals. The radio communication unit 51 can support Massive MIMO in which a beam with higher directivity is generated by controlling radio (RF) signals transmitted from a plurality of antenna elements, carrier aggregation (CA) in which a plurality of component carriers (CCs) are bundled and used, and the like. The radio communication unit 51 may or may not support DC.

The NW IF unit 53 provides a communication interface for realizing connection with the NGC side or the like. For example, the NW IF unit 53 may include interfaces such as X2, Xn, N2, and N3.

The lower node connection unit 55 provides an interface for realizing connection with a lower node than the IAB donor. The lower node means a radio communication node positioned closer to an end user side than the IAB donor (may be referred to as a downstream side or a downlink side), and may include the radio communication node 100 (parent node) and the radio communication node 150 (IAB node).

The radio link in the lower node (parent node) may mean a radio link between the parent node (radio communication node 100) and the IAB node (radio communication node 150) instead of a radio link between the IAB donor (radio communication node 50) and the parent node (radio communication node 100).

The control unit 57 controls each functional block constituting the radio communication node 50. In particular, in the present embodiment, the control unit 57 performs DC and can perform control on DC between the radio communication node 100 constituting a master node (MN) and the radio communication node 100 constituting a secondary node (SN).

Further, the control unit 57 may control notification of information (beam information) on an antenna beam BM used by the IAB node (IAB-MT and IAB-DU). Specifically, the control unit 57 may notify beam information applied to the parent node and/or IAB node via the lower node connection unit 55.

In order to receive a demodulation reference signal (DMRS) of a Physical Downlink Shared Channel (PDSCH) or a Physical Downlink Control Channel (PDCCH), a Transmission Configuration Indication (TCI) state is configured in NR (if the state is not configured, it can be a QCL relationship with an SSB index during the most recent transmission of a Physical Random Access Channel (PRACH)).

The TCI state may mean that explicit configuration is indicated by a control element (MAC CE) of a radio resource control layer (RRC) or a medium access control layer (MAC). The QCL relationship may include both the case where the TCI state is explicitly configured and the case where the TCI state is not configured. The QCL/TCI state/beam (antenna beam) may be read interchangeably.

The beam information may include any information on this kind of QCL/TCI state/beam. In short, it may be an index (SSB index) for identifying an SSB (SS/PBCH Block) which is a block of a synchronization signal/broadcast channel constituted by a Synchronization Signal (SS) and a Physical Broadcast CHannel (PBCH).

### (2.2) Radio communication node 100 and radio communication node 150

Fig. 3 is a functional block diagram of the radio communication node 100 constituting the parent node and the radio communication node 150 constituting the IAB node. Functions of the radio communication node 100 will be mainly described below.

As shown in Fig. 3, the radio communication node 100 includes a radio communication unit 110, an upper node connection unit 170, a lower node connection unit 180, and a control unit 190.

The radio communication unit 110 transmits and receives NR-compliant radio signals. The radio communication unit 110 can support Massive MIMO in which a beam with higher directivity is generated by controlling radio (RF) signals transmitted from a plurality of antenna elements, carrier aggregation (CA) in which a plurality of component carriers (CCs) are bundled and used, dual connectivity (DC) in which communication is performed simultaneously between a UE and each of two NG-RAN Nodes, and the like.

Further, the radio communication unit 110 may receive beam information on an antenna beam BM. Specifically, the radio communication unit 110 may receive beam information (first beam information) on the antenna beam BM of a DU (first unit) of a lower node (may include an IAB node).

Although the IAB-DU is associated with the first unit, the first unit may be called by other names such as a downstream unit and a distributed unit. Further, although the IAB-MT is associated with a second unit, the second unit may be called by other names such as an upstream unit and a terminal termination unit.

In the case of the IAB node (radio communication node 150), the radio communication unit 110 may receive beam information on the antenna beam BM of the IAB-DU of its own node from the upper node (parent node).

The upper node connection unit 170 provides an interface for realizing connection with an upper node than the parent node. The upper node means a radio communication node positioned closer to a network side, specifically, a core network side (may be referred to as an upstream side or an uplink side) than the parent node.

Further, in the case of the IAB node (radio communication node 150), the upper node connection unit 170 provides an interface for realizing connection with an upper node than the IAB node. In the case of the IAB node, the upper node means a radio communication node positioned closer to a network side, more specifically, a core network side (may be referred to as an upstream side or an uplink side) than the IAB node.

Specifically, the upper node connection unit 170 provides functions of Mobile Termination (MT). That is, in the present embodiment, the upper node connection unit 170 may be used for connection with the upper node.

Further, the upper node connection unit 170 may transmit, to the parent node, a control element (MAC CE) of a medium access control layer (MAC) indicating a recommended antenna beam recommended for use (may be referred to as a recommended beam). In the present embodiment, the upper node connection unit 170 may constitute a transmitting unit.

Specifically, the upper node connection unit 170 may transmit, to the parent node, an MAC CE including information for identifying an antenna beam which can be used (use is recommended) as an antenna beam for its own node and is transmitted by the parent node. A configuration example of the MAC CE will be described later.

The upper node connection unit 170 may transmit the MAC CE, if the control unit 190 recognizes a candidate antenna beam (may be referred to as a candidate beam) selected from the recommended antenna beams or if a specified time elapses due to expiration of a timer.

The recommended antenna beam may be applied to at least any of a plurality of bandwidth parts (BWPs) or a plurality of serving cells. The serving cells may be IAB-DU serving cells or IAB-MT serving cells.

The Bandwidth part (BWP) specifies a frequency direction and may be read as a frequency region, a frequency domain, a resource block, a resource block group, a subcarrier, a subchannel, a common frequency resource, or the like.

The lower node connection unit 180 provides an interface for realizing connection with a lower node than the parent node. The lower node means a radio communication node positioned closer to an end user side (may be referred to as a downstream side or a downlink ide) than the IAB node.

Specifically, the lower node connection unit 180 provides functions of a Distributed Unit (DU). That is, in the present embodiment, the lower node connection unit 180 is used for connection with the IAB node or child node (may be a UE 200) constituting the lower node.

The control unit 190 controls each functional block constituting the radio communication node 150. In particular, in the present embodiment, the control unit 190 can perform control on the antenna beam BM of the IAB node (child node).

Specifically, the control unit 190 may retain beam information (first beam information) on the antenna beam BM of the IAB-DU. The control unit 190 may retain the beam information received from the CU or the like via the upper node connection unit 170.

Further, the control nit 190 may recognize beam information (second beam information) on the antenna beam BM of the second unit of the lower node (IAB node), that is, the IAB-MT by means of an operation specified in the 3GPP TS 38.213.

The control unit 190 may retain the beam information (first beam information) on the antenna beam BM of the IAB-DU and the beam information (second beam information) on the antenna beam BM of the IAB-MT.

The control unit 190 can control transmission of the antenna beam BM. Specifically, the control unit 190 may configure the antenna beam BM used by the IAB-DU, based on the beam information received from the upper node such as the parent node. Alternatively, the control unit 190 may configure the antenna beam BM used by the IAB-DU, based on the first beam information and the second beam information.

The antenna beam BM used by the IAB-DU may be different from the antenna beam BM used by the IAB-MT, or the antenna beams may overlap partially or completely.

The control unit 190 may configure the antenna beam BM used by the IAB-DU according to a resource type (such as D/U/F and/or H/S/NA) applied to the IAB-DU and a channel allocated to the IAB-DU or IAB-MT.

Further, in the case of the IAB node (radio communication node 150), the control unit 190 may configure the antenna beam BM used by the IAB-MT of its own node, based on the beam information received from the parent node (radio communication node 100).

In this case, the antenna beam BM used by the IAB-MT may be different from the antenna beam BM used by the IAB-DU, or the antenna beams may overlap partially or completely.

In addition, the control unit 190 may recognize the candidate antenna beam (candidate beam) selected from the recommended antenna beams (recommended beams) based on an explicit or implicit method.

Specifically, the candidate beam may be explicitly configured and indicated to the IAB node by means of an RRC, MAC CE, or Downlink Control Information (DCI). Alternatively, the candidate beam may be implicitly recognized based on a Joint DL/UL TCI state, DL TCI state, or UL TCI state (Release-17 (Rel-17)) configured by the RRC. An example of how the IAB node recognizes the candidate beam will be described later.

### (3) Operation of radio communication system

Next, an operation of the radio communication system 10 will be described. Specifically, an operation related to control of the antenna beam BM of the IAB-MT and the IAB-DU will be described.

### (3.1) Operation outline

With respect to simultaneous transmission of the IAB-MT and IAB-DU, it is assumed that the parent node indicates an antenna beam to be used by the IAB-MT in consideration of a selection status of an antenna beam of the IAB-DU. If the parent node indicates an antenna beam to be used by the IAB-MT, the parent node needs to recognize a selection status of an antenna beam of the IAB-DU.

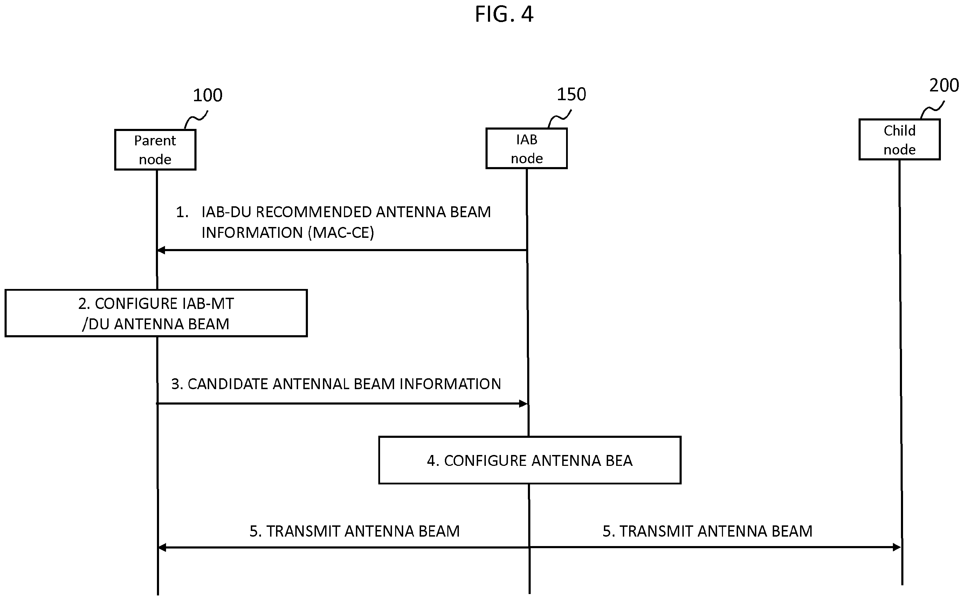

Fig. 4 shows an example of a schematic communication sequence for control of the antenna beam BM of the IAB-MT and IAB-DU. As shown in Fig. 4, the IAB node (radio communication node 150) can transmit, to the parent node (radio communication node 100), an MAC CE including information on recommended antenna beams (recommended beams) recommended for the IAB-MT.

Further, the parent node can notify the IAB node of a candidate antenna beam (candidate beam) selected from the recommended antenna beams.

The IAB node may determine an antenna beam to be used by the IAB-MT, based on information on the candidate antenna beam and transmit the antenna beam to the parent node. Further, the IAB node may determine an antenna beam to be used by the IAB-DU and transmit the antenna beam to the child node (UE 200).

The following operation examples concerning the parent node and the IAB node will be described below.

- (Operation Example 1): Notification of a recommended beam by means of an MAC CE from the IAB node

The IAB node notifies the parent node of recommended beams using MAC CEs configured as follows:
- (Alt 1-1): Information on recommendedbeam for one MT BWP / serving cell / {MT serving cell, DU cell} pair is notified with one MAC CE.
- (Alt 1-2): Information on recommendedbeam for a plurality of MT BWP / serving cells / {MT serving cell, DU cell} pairs is notified with one MAC CE.
- (Alt 2-1): Information on a recommended beam for one Multiplexing case is notified with one MAC CE.
- (Alt 2-2): Information on a recommended beam for a plurality of Multiplexing cases is notified with one MAC CE.
- (Alt 3-1): Information on a recommended beam for either MT DL or MT UL is notified with one MAC CE.
- (Alt 3-2): Information on a recommended beam for both MT DL and MT UL is notified with one MAC CE.
- (Alt 4-1): Information on a recommended beam for one MT DL/UL channel is notified with one MAC CE.
- (Alt 4-2): Information on a recommended beam for a plurality of MT DL/UL channels is notified with one MAC CE.
- (Operation Example 2): How to determine a recommended beam to be reported from the IAB node to the parent node
- (Option 1): A candidate beam is explicitly notified using RRC/MAC CE/DCI.
- (Option 2): A candidate beam is implicitly notified.
- (Operation Example 3): MAC CE reporting is triggered by configuration of a timer or RRC.
- (Operation Example 4): A recommended beam is applied to a plurality of MT BWPs/serving cells and the like.

For example, reporting for one MT BWP is applied to other BWPs also. Further, in the following operation examples, an MT beam may be referred to as information of an SRI field in a codepoint of a TCI/TCI field in DCI of an MT BWP/serving cell, specifically SSB / CSI-RS (Channel State Information Reference Signal) / SRS (Sounding Reference Signal) / spatialRelationInfo / Rel-17 UL TCI / Rel-17 joint UL and DL TCI / TCI state /codepoint. A DU beam may be referred to as an SSB/CSI-RS/SRS of a DU cell.

Further, the following operation examples may be limited to applications to an SRS used as "beam management" and/or "CB" and/or "NCB", a "periodic" SRS and/or a "semi-persistent" SRS and/or an "aperiodic" SRS, or a "periodic" CSI-RS and/or a "semi-persistent" CSI-RS and/or an "aperiodic" CSI-RS.

### (3.2) Operation examples

### (3.2.1) Operation Example 1

An MAC CE for an indication of a recommended beam to the parent node may include the following:
- (Alt 1-1): Information on recommendedbeam for one MT BWP / serving cell / {MT serving cell, DU cell} pair is notified with one MAC CE.
- (Alt 1-2): Information on recommendedbeam for a plurality of MT BWP /serving cells / {MT serving cell, DU cell} pairs is notified with one MAC CE.

A separate beam set of may be represented for each MT BWP /serving cell / {MT serving cell, DU cell} pair. Further, a set of beams are represented and may be applied to a plurality of MT BWP / serving cell / {MT serving cell, DU cell} pairs.
- (Alt 2-1): Information on a recommended beam for one Multiplexing case is notified with one MAC CE.

In the case of a Multiplexing case, it may be referred to as MT-Tx (transmission)/DU-Tx, MT-Tx/DU-Rx (reception), MT-Rx/DU-Tx, or MT-Rx/DU-Rx.
- (Alt 2-2): Information on a recommended beam for a plurality of Multiplexing cases is notified with one MAC CE.

A separate beam set may be represented for each Multiplexing case. Further, a set of beams are represented and may be applied to a plurality of Multiplexing cases.
- (Alt 3-1): Information on a recommended beam for either MT DL or MT UL is notified with one MAC CE.
- (Alt 3-2): Information on a recommended beam for both MT DL and MT UL is notified with one MAC CE.

Beam sets of the MT DL and MT UL may be represented separately. Further, a set of beams are represented and may be applied to both of the MT DL and MT UL.
- (Alt 4-1): Information on a recommended beam for one MT DL/UL channel is notified with one MAC CE.

The MT DL/UL channel RX may refer to a PDCCH/PDSCH/PUSCH/PUCCH.
- (Alt 4-2): Information on a recommended beam for a plurality of MT DL/UL channels is notified with one MAC CE.

A separate beam set may be represented for each MT DL/UL channel. Further, a set of beams are represented and may be applied to a plurality of MT DL/UL channels.

The Alts described above may be combined, for example, and one MAC CE may be represented for one Multiplexing case for one MT BWP/serving cell.

The number or maximum number of beams represented by an MAC CE, the number or maximum number of beams for each MT BWP/serving cell and each {MT serving cell, DU Cell} pair/MT DL/MT UL/each MT DL/UL channel, the number or maximum number of MT BWP/serving cells reported in the MAC CE, and the maximum number of each {MT serving cell, DU cell} pair may be specified in advance or configured each time. Alternatively, the maximum number may be determined according to the capability of the IAB node.

Note that an MT BWP / serving cell / {MT serving cell, DU Cell} pair may be replaced by a group of MT BWP / serving cell / {MT serving cell, DU Cell} pairs.

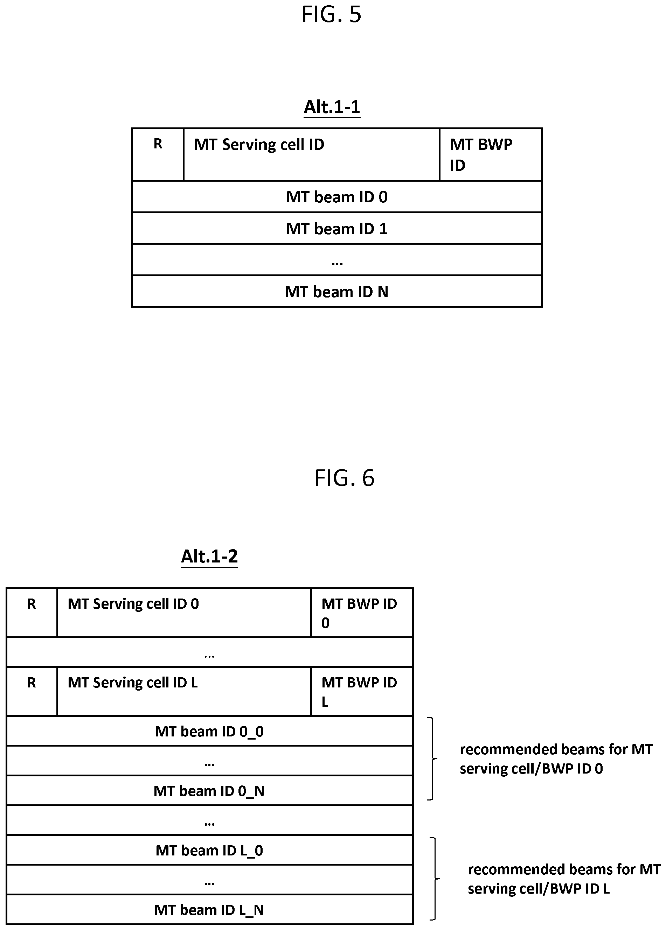

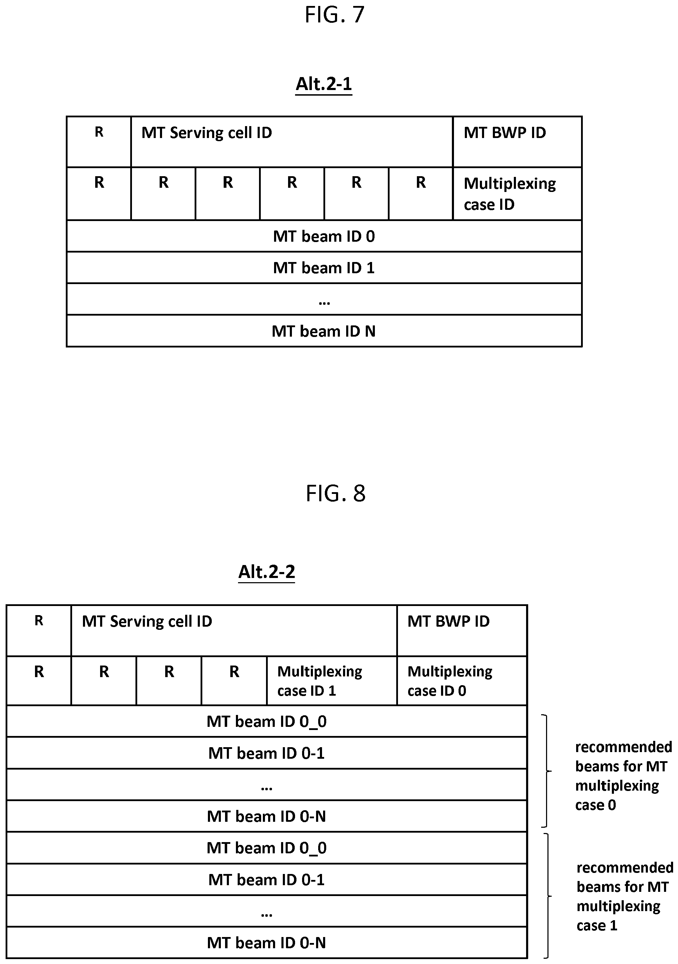

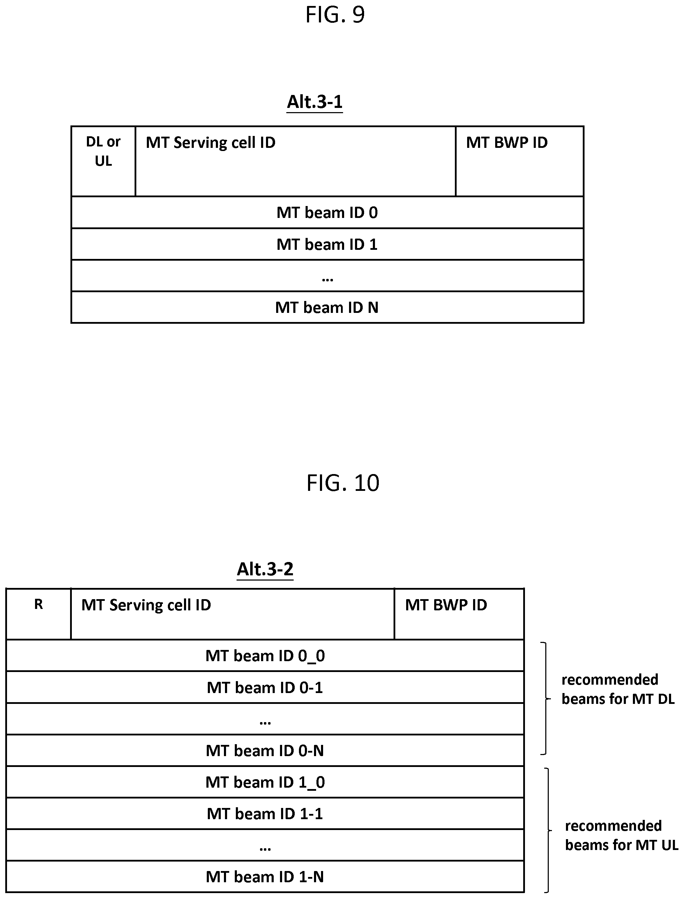

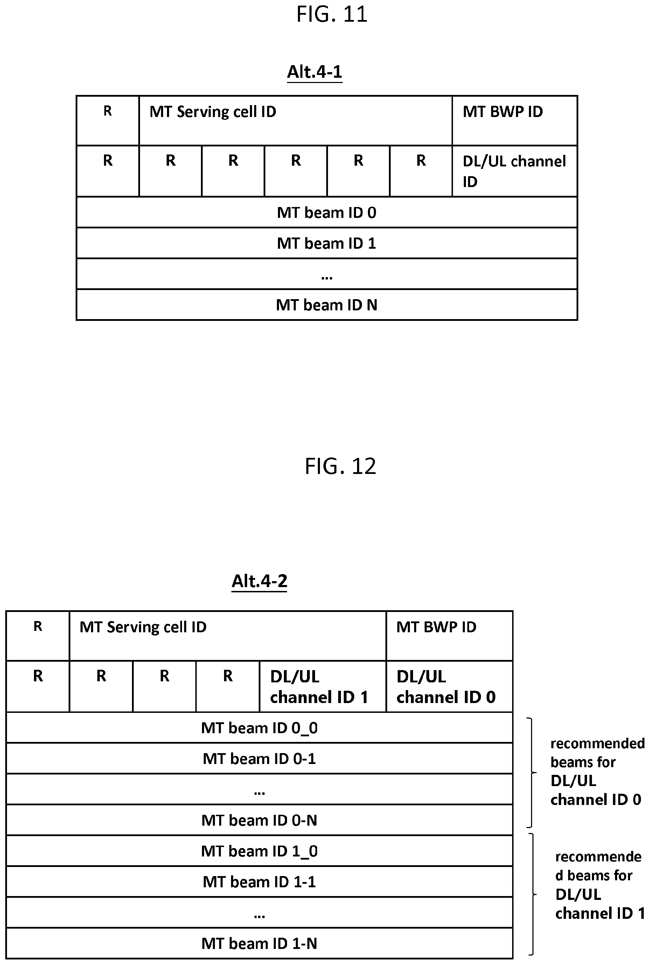

Figs. 5 to 12 show configuration examples of the MAC CEs according to the above-described (Alt 1-1) to (Alt 4-2). Specifically, Fig. 5 shows a configuration example of the MAC CE according to (Alt 1-1) of Operation Example 1. Fig. 6 shows a configuration example of the MAC CE according to (Alt 1-2) of Operation Example 1. Fig. 7 shows a configuration example of the MAC CE according to (Alt 2-1) of Operation Example 1. Fig. 8 shows a configuration example of the MAC CE according to (Alt 2-2) of Operation Example 1. Fig. 9 shows a configuration example of the MAC CE according to (Alt 3-1) of Operation Example 1. Fig. 10 shows a configuration example of the MAC CE according to (Alt 3-2) of Operation Example 1. Fig. 11 shows a configuration example of the MAC CE according to (Alt 4-1) of Operation Example 1. Fig. 12 shows a configuration example of the MAC CE according to (Alt 4-2) of Operation Example 1.

Due to the MAC CE shown in Fig. 6 including a DU cell ID or a {MT serving cell, DU cell} pair ID, a recommended beam may be represented for each {MT serving cell, DU Cell} pair. Further, a set of beams are represented and may be applied to a plurality of MT BWP/serving cell/{MT serving cell, DU Cell} pairs.

If the MAC CE shown in Fig. 8 includes recommended beams for all Multiplexing cases supported by the IAB node, a Multiplexing case ID may be omitted. Further, a set of beams are represented and may be applied to a plurality of Multiplexing cases.

In the MAC CE shown in Fig. 10, a set of beams are represented and may be applied to both the DL and UL.

In the MAC CE shown in Fig. 11, a DL/UL channel ID may represent any of PDCCH/PDSCH/Physical Uplink Shared Channel (PUSCH)/Physical Uplink Control Channel (PUCCH).

If the MAC CE shown in Fig. 12 includes Physical Uplink Control Channels of all DL/UL channels, the DL/UL channel ID may be omitted. Further, a set of beams are represented and may be applied to a plurality of channels.

With respect to the configuration examples of the MAC CEs described above, the following contents may be further applied.

- If a beam is either an SSB or CSI-RS, one bit is added for each beam to represent whether the beam is the SSB or CSI-RS.
- The size of a beam ID depends on the maximum number of beams in an MT service cell/BWP.
- The size of an MT serving cell/BWP ID field depends on the maximum number of MT serving cells/BWPs.
- The size of a DU cell ID field depends on the maximum number of DU cells.
- In the case of display for each MT serving cell group / BWP group / DU cell group, an MT serving cell ID / BWP ID / DU cell ID is replaced as an MT serving cell group ID / BWP group ID / DU cell group ID.

Grouping may be configured by means of higher layer signaling (for example, RRC).

### (3.2.2) Operation Example 2

A candidate beam for a recommended beam indication for the parent node may be determined according to the following options.

The candidate beam may mean a beam selected from the recommendedbeam by the IAB node.

- (Option 1): The candidate beam is explicitly configured/indicated by using an RRC/MAC CE/DCI.

The candidate beam may be configured for each pair of MT/MT BWP/serving cell/{MT serving cell, DU Cell}.

The candidate beam may be configured for each Multiplexing case.

The candidate beam may be configured separately for the MT DL or MT UL.

The candidate beam may be configured for each MT DL/UL channel.

- (Option 2): A candidate beam may be implicitly determined from one or more of the following.
- Rel-17 joint DL/UL TCI state, Rel-17 DL TCI state, or Rel-17 UL TCI state configured by the RRC.
- The Rel-17 joint DL/UL TCI state, Rel-17 DL TCI state, or Rel-17 UL TCI state activated by the MAC CE.
- A TCI state pool for the DL configured by the RRC, a TCI state pool for the PDSCH configured by the RRC, or a TCI state pool for the PDCCH configured by the RRC (for example, signaling according to Release-15, 16: tci-StatesToddModList, tci-StatesPDCCH-ToAddList).
- The MAC CE activates the DL TCI state for the PDSCH, or the MAC CE represents the DL TCI state for control resource sets (CORESETs) (signaling according to Release-15, 16: TCI States Activation/Deactivation for UE-specific PDSCH MAC CE, TCI State Indication for UE-specific PDCCH MAC CE, and Enhanced TCI States Activation/Deactivation for UE-specific PDSCH MAC CE).
- CB/NCB/BM SRS resources constituted/activated/triggered by the RRC/MAC CE/DCI.
- Spatial relation configured/indicated for the CB/NCB/BM SRS resources by the RRC/MAC CE.
- A PUCCH spatial relations pool configured by the RRC (signaling according to Release-15, 16: spatial relationInfoToAddModList).
- A PUCCH spatial relation indicated by the MAC CE to a PUCCH resource (signaling according to Release-15, 16: PUCCH spatial relation Activation/Deactivation MAC CE and Enhanced PUCCH Spatial relation Activation/Deactivation MAC CE).

The above TCI state/RS/spatial relation itself or a reference RS of the above TCI state/RS/spatial relation may be regarded as a candidate beams and it may be reported by the MAC CE.

### (3.2.3) Operation Example 3

The MAC CE described above may be triggered by any of the following or a plurality of events.

- Aperiodic timer for MAC CE expires. A configuration value of the periodic timer may be configured as desired or may be specified in advance.
   - The IAB node receives an RRC configuration/RRC reconfiguration of any of the following.
   - An explicit configuration of a candidate beam (similar to Option 1 of Operation Example 2)
   - A Rel-17 joint DL/UL TCI state, Rel-17 DL TCI state, or Rel-17 UL TCI state
   - A TCI state of a Rel-15/16 DL/PDSCH/PDCCH
   - CB/NCB/BM SRS resources
   - A spatial relation of the CB/NCB/BM SRS resources
   - A spatial relation of PUCCH resources
   - The IAB node receives an MAC CE indication of any of the following.
      - Explicit candidate beam (similar to Option 1 of Operation Example 2)
      - Activation of the Rel-17 joint DL/UL TCI state, Rel-17 DL TCI state, or Rel-17 UL TCI state
      - Display of a Rel-15/16 DL TCI state for PDSCH or a DL TCI state for CORESET that have been activated
      - A spatial relation of a PUCCH represented for a PUCCH resource
      - A spatial relation represented for CB/NCB/BM SRS resources
   - The IAB node receives a DCI indication of any of the following.
      - Explicit candidate beam (similar to Option 1 of Operation Example 2)
      - Trigger an aperiodic RS
   - The IAB node receives any signaling leading to MT beam/DU beam update.
   - The IAB node receives any signaling leading to update of MT BWP / serving cell / DU cell / {MT serving cell, DU cell pair}.
   - The IAB node receives any signaling leading to MT Multiplexing case update.
   - When the IAB node requires update of recommended beam / Multiplexing case / multiplexing capability (by means of implementation by the IAB node)
   - When report is not triggered
   - When an event of any of the above occurs and a prohibit timer expires.

A configuration value of the prohibit timer may be configured as desired or may be specified in advance.

### (3.2.4) Operation Example 4

The display of MT beams recommended simultaneously between MT BWP / serving cell / {MT serving cell, DU Cell} pairs may be supported.

For example, a list of a plurality of MT BWP / serving cell / {MT serving cell, DU cell} pairs may be configured. Here, the following assumptions may be applied.

The list is configured from the parent node, the IAB donor, or both.
- The configuration of the list may be recognized by at least any of the IAB node, the parent node, and the IAB donor.
- The maximum number of lists may be specified in advance as the capability of the IAB node or reported to another node or the like.
- The maximum number of MT BWP / serving cell / {MT serving cell, DU cell} pairs in each list may be specified in advance as the capability of the IAB node or reported to another node or the like.

A list of a plurality of MT BWPs may be specified in advance as all BWPs in a serving cell.
- If a recommended MT beam is represented for MT BWP / serving cell / {MT serving cell, DU cell} pairs in a list, the displayed recommended MT beam is applied to all MT BWP / serving cell / {MT serving cell, DU cell} pairs in the list.

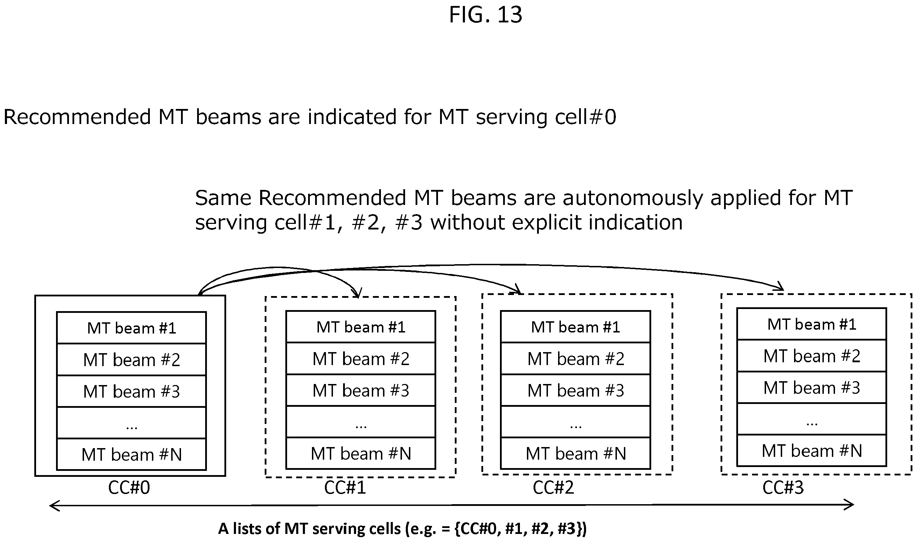

FIG. 13 shows an application example of a recommended MT beam according to Operation Example 4. As shown in Fig. 13, the configuration of a recommended MT beam for MT serving cell #0 may be autonomously applied to another MT serving cell.

The recommended MT beam may be reported by the same MAC CE using the following parameters.

- Timing mode
- Guard band
- PC parameter of DL or UL
- Orthogonal DMRS port

At least any of the following metrics may be targeted for each recommended MT beam reported with the MAC CE.

- L1-RSRP (Reference Signal Received Power)
- L1-SINR (Signal-to-Interference plus Noise power Ratio)
- Other interference measurement results (CLI (Cross Link Interference), self-interference)

### (3.2.5) IAB node capability and higher layer signaling

The following IAB node capability and/or higher layer signaling may be configured.

- Whether the IAB node supports a recommended MT beam indication for a DU/MT simultaneous operation mode via the MAC CE

Whether the recommended MT beam indication is supported for each MT BWP / serving cell / {MT serving cell, DU cell} pair / Multiplexing case / DL, or for each UL/DL or UL channel may be notified.
- Whether there is support for a recommended MT beam simultaneous indication between MT BWP / serving cell / {MT serving cell, DU cell} pairs.

If the indication is supported, the maximum number of lists and the maximum number of MT BWP / processing cell / {MT serving cell, DU cell} pairs in a list may be notified.

This kind of operation may be applied only when the corresponding capability is supported and/or enabled by higher layer (for example, RRC) signaling.

### (4)Action and effect

According to the above embodiment, the following effects can be obtained. Specifically, according to the IAB node (radio communication node 150), it is possible to transmit, to the parent node, an MAC CE representing a recommended beam recommended for use.

Therefore, the parent node can easily and reliably recognize a selection status of an antenna beam of the IAB-DU. Accordingly, even when the simultaneous transmission/simultaneous reception of the IAB-MT and the IAB-DU is applied, an efficient operation can be realized by considering a selection status of an antenna beam.

### (5) Other embodiments

Although the contents of the present invention have been described in accordance with the embodiment, the present invention is not limited to the descriptions, and it is obvious to those skilled in the art that various modifications and improvements are possible.

For example, in the above embodiment, although names such as the parent node, the IAB node, and the child node are used, different names may be used as long as a configuration of a radio communication node is adopted in which the radio backhaul between radio communication nodes such as gNBs and the radio access to a terminal are integrated. The nodes may be simply referred to as a first node, a second node, and the like or the nodes may be referred to as an upper node, a lower node, a relay node, an intermediate node, and the like, for example.

Further, a radio communication node may be simply referred to as a communication device or communication node, or may be read as a radio base station.

Further, in the above description, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

In the present disclosure, terms such as "precoding", "precoder", "weight (precoding weight)", "Quasi-Co-Location (QCL)", "Transmission Configuration Indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

The block diagrams (Figs. 2 and 3) used in the description of the above-described embodiment shows blocks in units of functions. Those functional blocks (components) can be realized by a desired combination of at least one of hardware and software. Further, a realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be referred to as a transmitting unit or a transmitter. For any of the above, as explained above, the realization method is not particularly limited.

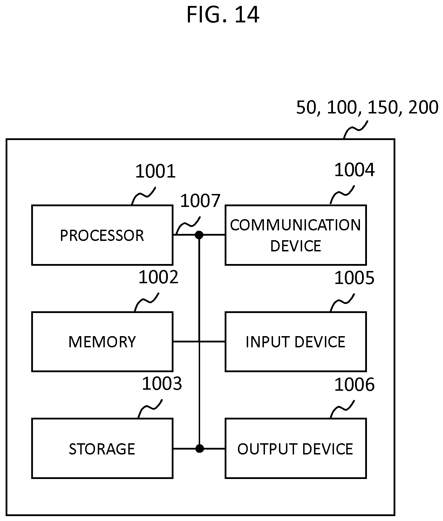

Further, the radio communication node 50, the radio communication node 100, the radio communication node 150, and the UE 200 (the device) described above may function as a computer that performs the processing of the radio communication method of the present disclosure. Fig. 14 is a diagram showing an example of a hardware configuration of the device. As shown in Fig. 14, the device may be configured as a computer device including a processor 1001, a memory 1002, a storage 1003, a communication device 1004, an input device 1005, an output device 1006, a bus 1007, and the like.

Furthermore, in the following explanation, the term "device" can be read as circuit, device, unit, or the like. The hardware configuration of the device may include one or a plurality of the devices shown in the figure or may not include some of the devices.

Each of the functional blocks of the device (see Figs. 2 and 3) is implemented by means of any of hardware elements of the computer device or a combination of the hardware elements.

In addition, each function in the device is realized by loading predetermined software (programs) onto hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a Central Processing Unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above can be executed by one processor 1001 or can be executed simultaneously or sequentially by two or more processors 1001. The processor 1001 can be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 can be referred to as an auxiliary storage device. The recording medium can be, for example, a database including at least one of the memory 1002 and the storage 1003, a server, or other appropriate media.

The communication device 1004 is hardware
(transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Further, the devices such as the processor 1001 and the memory 1002 are connected to each other via the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI)), higher layer signaling (for example, RRC signaling), Medium Access Control (MAC) signaling, broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure can be applied to at least one of Long Term Evolution (LTE), LTE-Advanced (LTE-A), SUPER 3G, IMT-Advanced, the 4th generation mobile communication system (4G), the 5^{th} generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure represent the elements of the various steps using an exemplary order and are not limited to the represented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is no limitation thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information can be stored in a specific location (for example, a memory) or can be managed in a management table. The information to be input/output can be overwritten, updated, or added. The information can be deleted after outputting. The input information can be transmitted to another device.

The determination may be made by using a value (0 or 1) represented by one bit, by truth-value (Boolean: true or false), or by comparison of numerical values (for example, comparison with a predetermined value).

Each aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Instead of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field, or magnetic particles, an optical field or photons, or a desired combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, "Component Carrier (CC)" may be referred to as "carrier frequency", "cell", "frequency carrier", or the like.

The terms "system" and "network" used in the present disclosure can be used interchangeably.

Furthermore, information, parameters, and the like described in the present disclosure can be represented by an absolute value, can be represented by a relative value from a predetermined value, or can be represented by corresponding other information. For example, a radio resource can be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, and the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico-cell.

A base station can accommodate one or more (for example, three) cells (also referred to as sectors). In a configuration in which a base station accommodates a plurality of cells, the entire coverage area of the base station can be divided into a plurality of smaller areas. In each such smaller area, a communication service can be provided by a base station subsystem (for example, a small base station for indoor use (Remote Radio Head: RRH)).

The term "cell" or "sector" refers to a part or all of the coverage area of at least one of a base station and a base station subsystem that perform a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be referred to as a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Further, a base station in the present disclosure may be read as a mobile station (user terminal, hereinafter the same). For example, each aspect/embodiment of the present disclosure may be applied to a configuration in which communication between a base station and a mobile station is replaced with communication between a plurality of mobile stations (for example, this may be referred to as Device-to-Device (D2D), Vehicle-to-Everything (V2X), or the like). In this case, the mobile station may have the function of a base station. In addition, words such as "uplink" and "downlink" may also be read as words corresponding to inter-terminal communication (for example, "side"). For example, an uplink channel, a downlink channel, or the like may be read as a side channel.

Similarly, the mobile station in the present disclosure may be read as a base station. In this case, the base station may have the function of the mobile station.

A radio frame may be constituted by one or more frames in a time domain.

Each frame or frames in the time domain may be referred to as a subframe. A subframe may be further constituted by one or more slots in the time domain.

The subframe may be a fixed time length (for example, 1 ms) independent of numerology.

The numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or more symbols (Orthogonal Frequency Division Multiplexing (OFDM)) symbols, Single Carrier Frequency Division Multiple Access (SC-FDMA) symbols, or the like) in the time domain. A slot may be a unit of time based on the numerology.

A slot may include a plurality of minislots. Each minislot may be constituted by one or more symbols in the time domain. A minislot may also be referred to as a subslot. A minislot may be composed of fewer symbols than slots. A PDSCH (or PUSCH) transmitted in time units greater than the minislot may be referred to as PDSCH (or PUSCH) mapping type A. A PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be referred to as a transmission time interval (TTI), a plurality of consecutive subframes may be referred to as TTI, and one slot or one minislot may be referred to as TTI. That is, at least one of the sub-frame and TTI may be a subframe (1 ms) in the existing LTE, a period shorter than 1 ms (for example, 1 to 13 symbols), or a period longer than 1 ms. Note that, a unit representing TTI may be referred to as a slot, a minislot, or the like instead of a subframe.

Here, TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited thereto.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, and the like are actually mapped may be shorter than the TTI.

When one slot or one minislot is referred to as a TTI, one or more TTIs (that is, one or more slots or one or more minislots) may be the minimum time unit of scheduling. The number of slots (minislot number) constituting the minimum time unit of scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

A long TTI (for example, an ordinary TTI, subframe, and the like) may be read as a TTI having a time length exceeding 1 ms, and a short TTI (for example, shortened TTI) may be read as a TTI having TTI length that is less than the TTI length of the long TTI and is 1 ms or more.

The resource block (RB) is a resource allocation unit in the time domain and frequency domain, and may include one or more continuous subcarriers in the frequency domain.

The number of subcarriers included in the RB may be the same regardless of the numerology and may be 12, for example. The number of subcarriers included in the RB may be determined based on the numerology.

Further, the time domain of the RB may include one or more symbols, and may have a length of 1 slot, 1 minislot, 1 subframe, or 1 TTI. Each TTI, subframe, and the like may be constituted by one or more resource blocks.

One or more RBs may be referred to as a physical resource block (Physical RB: PRB), a subcarrier group (Sub-Carrier Group: SCG), a resource element group (Resource Element Group: REG), PRB pair, RB pair, and the like.

Further, a resource block may be constituted by one or more resource elements (Resource Element: RE). For example, one RE may be a radio resource area of one subcarrier and one symbol.

A Bandwidth Part (BWP) (may be referred to as a partial bandwidth or the like) may represent a subset of contiguous common resource blocks (RBs) for certain numerology in a certain carrier. Here, the common RB may be specified by an index of the RB based on the common reference point of the carrier. The PRB may be defined in a certain BWP and numbered within the BWP.

The BWP may include a BWP for UL (UL BWP) and a BWP for DL (DL BWP). One or more BWPs may be configured in one carrier for the UE.

At least one of the configured BWPs may be active, and the UE may not expect to transmit and receive certain signals/channels outside the active BWP. Note that a "cell", "carrier", and the like in the present disclosure may be read as a "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, Cyclic Prefix (CP) length, and the like can be changed in various ways.

The terms such as "connected" and "coupled" or any variations thereof mean any direct or indirect connection or coupling between two or more elements. Further, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, and printed electrical connections, and as some non-limiting and non-exhaustive examples, by using electromagnetic energy having wavelengths in a radio frequency domain, microwave region, and light (both visible and invisible) regions, and the like.

The reference signal may be abbreviated as Reference Signal (RS) and may be referred to as pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of the elements. Such designations can be used in the present disclosure as a convenient way to distinguish between two or more elements. Therefore, the reference to the first and second elements does not imply that only two elements can be adopted, or that the first element must precede the second element in some or the other manner.

In the present disclosure, used terms such as "include" and "including" and variants thereof are intended to be inclusive in a manner similar to a term "comprising". Furthermore, a term "or" used in the present disclosure is intended not to be an exclusive OR.

Throughout the present disclosure, for example, during translation, if articles such as a, an, and the in English are added, in the present disclosure, these articles shall include a plurality of nouns following the articles.

As used in the present disclosure, terms "determining" and "determining (deciding)" may encompass a wide variety of actions. The terms "determining" and "determining (deciding)" include, for example, actions of determining and determining (deciding) that the following are performed: judging, calculating, computing, processing, deriving, investigating, looking up, search, inquiry (for example, searching in a table, database, or other data structures), and ascertaining. In addition, the terms "determining" and "determining (deciding)" can include actions of determining and determining (deciding) that the following are performed: receiving (for example, receiving information), transmitting (for example, transmitting information), input, output, and accessing (for example, accessing data in a memory). In addition, the terms "determining" and "determining (deciding)" can include actions of determining and determining (deciding) that the following are performed: resolving, selecting, choosing, establishing, and comparing. That is, the terms "determining" and "determining (deciding)" may include actions of determining and determining (deciding) that some action are performed. Moreover, the term "determining (determining (deciding))" may be read as "assuming", "expecting", "considering", and the like.

In the present disclosure, a term "A and B are different" may mean "A and B are different from each other". It should be noted that the term may mean "A and B are each different from C". Terms such as "leave" and "coupled" may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 Radio communication system
20 NG-RAN
50 Radio communication node
51 Radio communication unit
53 NW IF unit
55 Lower node connection unit
57 Control unit
100 Radio communication node
110 Radio communication unit
150 Radio communication node
170 Upper node connection unit
180 Lower node connection unit
190 Control unit
200 UE
1001 Processor
1002 Memory
1003 Storage
1004 Communication device
1005 Input device
1006 Output device
1007 Bus

## Claims

1. A radio communication node comprising:
a control unit for controlling transmission of an antenna beam; and
a transmitting unit for transmitting, to a parent node, a control element of a medium access control layer representing a recommended antenna beam recommended for use.

2. The radio communication node according to claim 1, wherein
the control unit recognizes a candidate antenna beam selected from the recommended antenna beam by means of an explicit or implicit method.

3. The radio communication node according to claim 2, wherein
the transmitting unit transmits the control element if the candidate antenna beam is recognized or if a specified time elapses.

4. The radio communication node according to claim 1, wherein
the recommended antenna beam is applied to at least any of a plurality of bandwidth parts or a plurality of serving cells.

5. A radio communication method comprising:
a step of controlling transmission of an antenna beam; and
a step of transmitting, to a parent node, a control element of a medium access control layer representing a recommended antenna beam recommended for use.
